# EUROPEAN PATENT APPLICATION

(11) **EP 4 318 744 A1**
(43) Date of publication of application: **07.02.2024**
(21) Application number: 22775103.9
(22) Date of filing: 09.03.2022
(51) Int. Cl.: H01M 50/107, H01M 50/167, H01M 50/586, H01M 50/593

(54) **CYLINDRICAL NON-AQUEOUS ELECTROLYTE SECONDARY BATTERY**

(30) Priority: 24.03.2021 JP 2021049369
(71) Applicant: Panasonic Energy Co., Ltd., Osaka 570-8511 (JP); Panasonic Holdings Corporation, Osaka 571-8501 (JP)
(72) Inventor: OKUNO, Morihiko, Kadoma-shi, Osaka 571-0057 (JP); YATOMI, Shota, Kadoma-shi, Osaka 571-0057 (JP)
(74) Representative: Novagraaf International SA
(86) International application number: PCT/JP2022/010201
(87) International publication number: WO 2022/202311

(57) **Abstract**

The present invention provides a cylindrical non-aqueous electrolyte secondary battery having a high capacity and improved safety. A non-aqueous electrolyte secondary battery according to an aspect of the present disclosure comprises: an exterior can which has a bottomed cylinder shape and which has grooved part at an opening part thereof; an electrode body and a non-aqueous electrolyte which are housed in the exterior can; a sealing body which, at the opening part, is fixed by crimping between the grooved part and an opening end part; and an upper insulating plate which is inserted between the electrode body and the sealing body. The upper insulating plate has a first insulating plate which is in the shape of a disc smaller than the inner diameter of the grooved part, and a second insulating plate which is in the shape of a ring and which is disposed below the first insulating plate. The first insulating plate has higher heat resistance than the second insulating plate.

## Description

### TECHNICAL FIELD

The present disclosure relates to a cylindrical non-aqueous electrolyte secondary battery.

### BACKGROUND ART

Secondary batteries might generate gas due to repeated charge and discharge, and thus are provided with a gas release mechanism that functions in case that internal pressure of the battery exceeds a certain value. Secondary batteries are also required to be resistant to external impact. Patent Literature 1 discloses a technique of improving safety of a secondary battery, where an upper insulating plate provided above an electrode assembly has a certain range of planar compressive strength, and has through hole(s) such that the opening ratio thereof falls within a certain range.

### CITATION LIST

### PATENT LITERATURE

PATENT LITERATURE 1: Japanese Unexamined Patent Application Publication No. 2014-53262

### SUMMARY

### TECHNICAL PROBLEM

Secondary batteries have been extensively used in recent years as power sources for electric vehicles, electric storage devices for utilizing natural energy and so forth, and are thus more and more required to have a high capacity. From the viewpoint of high capacity, it has been attempted to expand the space for housing an electrode assembly with use of a thin exterior can and a thin separator. There is, however, a limit on reducing the thickness of exterior can and separator from the viewpoint of safety. To increase the battery capacity is not discussed in the technique disclosed in Patent Literature 1, and therefore there is still room for improvement.

It is an advantage of the present disclosure to provide a cylindrical non-aqueous electrolyte secondary battery having high capacity and improved in safety.

### SOLUTION TO PROBLEM

A cylindrical non-aqueous electrolyte secondary battery according to one aspect of the present disclosure comprises: a bottomed cylindrical exterior can having an opening that is provided with a grooved portion; an electrode assembly and a non-aqueous electrolyte that are housed in the exterior can; a sealing assembly fixed by crimping between the grooved portion and an open edge at the opening; and an upper insulating plate inserted between the electrode assembly and the sealing assembly, wherein the upper insulating plate has a first insulating plate of a disk shape smaller than an inner diameter of the grooved portion and has a second insulating plate of a ring shape placed under the first insulating plate, and the first insulating plate is more heat resistant than the second insulating plate.

### ADVANTAGEOUS EFFECT OF INVENTION

A cylindrical non-aqueous electrolyte secondary battery according to the present disclosure is satisfactory in terms of both battery capacity and safety.

### BRIEF DESCRIPTION OF DRAWING

FIG. 1 is a longitudinal sectional view of a cylindrical non-aqueous electrolyte secondary battery according to one embodiment.
FIG. 2 is a perspective view of an upper insulating plate according to one embodiment in an exploded state.

### DESCRIPTION OF EMBODIMENTS

An exemplary embodiment of a cylindrical secondary battery according to the present disclosure is described in detail below with reference to the drawings. In the description below, specific shapes, materials, numeral values, directions and so on are provided for the purpose of exemplification in order to facilitate understanding of the present invention, and can be changed as necessary in conformity with specifications of the cylindrical secondary battery. In the case where the description below includes a plurality of embodiments and modifications, it is preliminary assumed that features of such embodiments and modifications may be properly combined.

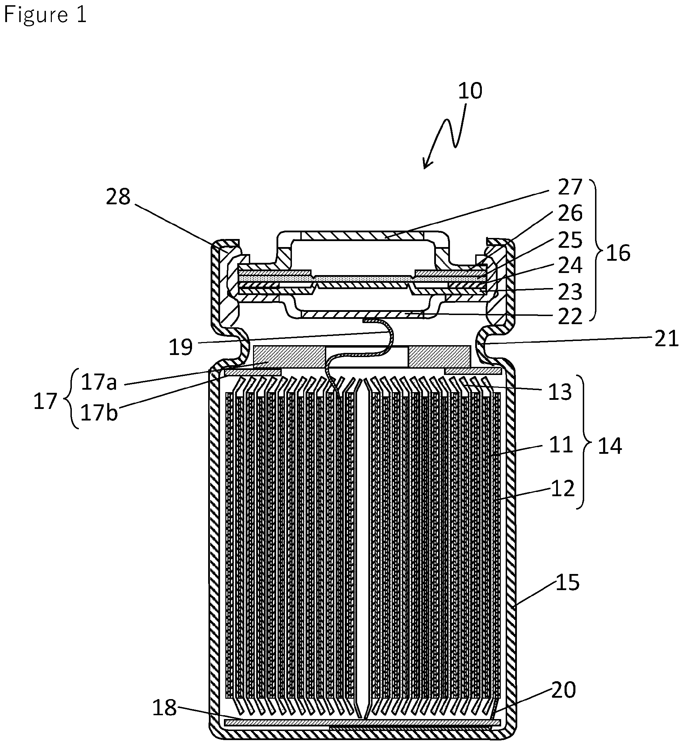

FIG. 1 is a longitudinal sectional view of a secondary battery 10 according to an exemplary embodiment. The secondary battery 10 shown in FIG. 1 has an electrode assembly 14 and a non-aqueous electrolyte (not shown) which are housed in an exterior can 15. In the description below, the side of a sealing assembly 16 is referred to as the "upper side" and the bottom side of the exterior can 15 as the "lower side" for the sake of convenience of description.

The electrode assembly 14 has a wound structure in which a positive electrode 11 and a negative electrode 12 are wound together with a separator 13 interposed therebetween. The positive electrode 11 has a strip-shaped positive electrode current collector and a positive electrode compound layer provided on both sides of the positive electrode current collector. Examples of the positive electrode current collector include metal (e.g., aluminum) foil, film provided with the metal foil as a surface layer, or the like.

The positive electrode compound layer is produced by, for example, coating both sides of the positive electrode current collector with positive electrode mixture slurry containing a positive electrode active material, a conductive agent, a binding agent, and a solvent such as N-methyl-2-pyrrolidone (NMP), followed by drying and compression. Examples of the positive electrode active material include a lithium-transition metal complex oxide containing a transition metal element such as Co, Mn, or Ni. Examples of the conductive agent include carbon materials such as carbon black (CB), acetylene black (AB), Ketjenblack, and graphite. Examples of the binding agent include fluorocarbon resins such as polytetrafluoroethylene (PTFE) and polyvinylidene fluoride (PVdF); polyacrylonitrile (PAN); polyimide (PI); acrylic resins; and polyolefin resins.

The negative electrode 12 has a strip-shaped negative electrode current collector and a negative electrode compound layer provided on both sides of the negative electrode current collector. Examples of the negative electrode current collector include metal (e.g., copper) foil, film provided with the metal foil as a surface layer, or the like.

The negative electrode compound layer is produced by, for example, coating both sides of the negative electrode current collector with negative electrode mixture slurry containing a negative electrode active material, a binding agent, and water or the like, followed by drying and compression. Examples of the negative electrode active material include carbon materials such as natural graphite and artificial graphite; metals such as Si and Sn which form an alloy with lithium; and alloys and oxides containing such a material. Examples of the binding agent include styrene-butadiene rubber (SBR), CMC or salts thereof; polyacrylic acids or salts thereof; and polyvinyl alcohols.

A porous sheet having ion permeability and insulation properties is used as the separator 13. Specific examples of the porous sheet include microporous films, woven fabrics, and non-woven fabrics. The material for the separator is preferably an olefin resin such as polyethylene or polypropylene.

Examples of a non-aqueous solvent (organic solvent) for the non-aqueous electrolyte housed in the exterior can 15 include carbonates, lactones, ethers, ketones, and esters, two or more of which may be mixed. In the case where two or more solvents are mixed, preferably used is a mixed solvent containing cyclic carbonate and chain carbonate. Examples of the cyclic carbonate include ethylene carbonate (EC), propylene carbonate (PC), and butylene carbonate (BC), and examples of the chain carbonate include dimethyl carbonate (DMC), ethyl methyl carbonate (EMC), and diethyl carbonate (DEC). Examples of an electrolyte salt for the non-aqueous electrolyte include LiPF₆, LiBF₄, LiCF₃SO₃ and the like, and a mixture thereof. The amount of dissolution of the electrolyte salt in the non-aqueous solvent may be 0.5 mol/L to 2.0 mol/L, for example.

The opening of the exterior can 15 is covered with the sealing assembly 16, thereby the interior of the secondary battery 10 is sealed airtightly. The electrode assembly 14 is provided with an upper insulating plate 17 and a lower insulating plate 18 on the upper and lower sides, respectively. A positive electrode lead 19 extends upward through a through hole of the upper insulating plate 17 and is welded to the lower surface of a filter 22 that serves as a bottom plate of the sealing assembly 16. In the secondary battery 10, a cap 27 serving as a top plate of the sealing assembly 16 electrically connected to the filter 22 comprises a positive electrode terminal. The negative electrode lead 20 extends through a through hole of the lower insulating plate 18 toward the bottom side of the exterior can 15, and is welded to the bottom inner surface of the exterior can 15. In the secondary battery 10, the exterior can 15 comprises a negative electrode terminal.

The exterior can 15 has a bottomed cylindrical shape and has an opening provided with a grooved portion 21. The exterior can 15 is made of metal, for example. The grooved portion 21 supports the sealing assembly 16 on the upper surface thereof, as described later. The exterior can 15 houses the electrode assembly 14 and the non-aqueous electrolyte at the part below the grooved portion 21. The grooved portion 21 is preferably annularly provided along the circumferential direction of the exterior can 15. The grooved portion 21 is formed by pressing the side wall of the exterior can 15 from the outside, for example.

The sealing assembly 16 is fixed by crimping between the grooved portion 21 and the open edge at the opening of the exterior can 15. The sealing assembly 16 has the filter 22, a lower vent member 23, an insulating member 24, an upper vent member 25, a PTC thermistor plate 26, and the cap 27 layered in order from the side of the electrode assembly 14. The members composing the sealing assembly 16 each have a disk shape or ring shape, for example, and are electrically connected to each other, except for the insulating member 24. The lower vent member 23 and the upper vent member 25 are connected at the center portion of each, and are provided with the insulating member 24 interposed therebetween at the peripheral portion of each. In case that internal pressure of the battery increases due to abnormal heat generation, the lower vent member 23 breaks, allowing the upper vent member 25 to swell toward the cap 27 and separate from the lower vent member 23, thereby interrupting electrical connection therebetween, for example. If the internal pressure further increases, the upper vent member 25 breaks, so that gas is released through an opening hole of the cap 27. In case that excessive current passes through the secondary battery 10, the temperature of the PTC thermistor plate 26 increases and accordingly the resistance of the PTC thermistor plate 26 rapidly increases, thereby the electric current is interrupted.

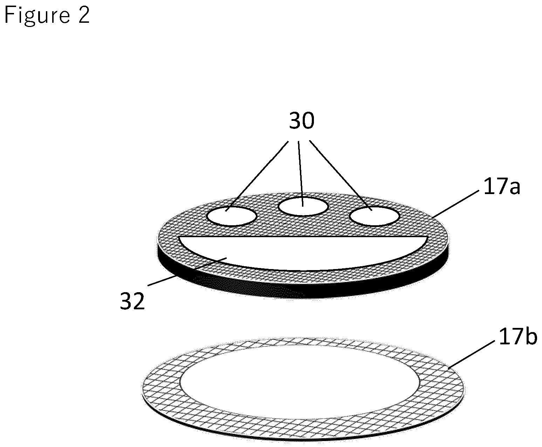

Next, the upper insulating plate 17 will be described with reference to FIG. 1 and FIG. 2.

As shown in FIG. 1, the upper insulating plate 17 has a first insulating plate 17a of a disk shape smaller than the inner diameter of the grooved portion 21 and has a second insulating plate 17b of a ring shape placed under the first insulating plate 17a. This allows the first insulating plate 17a to be positioned inside the grooved portion 21 with the second insulating plate 17b placed under the grooved portion 21, which increases the space for housing the electrode assembly 14, and therefore the secondary battery 10 can exhibit a high capacity.

The ring width of the second insulating plate 17b may be greater than a protruding length of the grooved portion 21 in the inward direction of the exterior can 15. With this configuration, the second insulating plate 17b can prevent the exterior can 15 from coming into contact with the upper portion of the electrode assembly 14 and, at the same time, can support the first insulating plate 17a from the lower side.

FIG. 2 is a perspective view of the upper insulating plate 17 according to one embodiment in an exploded state. The diameter of the first insulating plate 17a is larger than the inner diameter of the ring of the second insulating plate 17b and smaller than the outer diameter of the ring of the second insulating plate 17b. The first insulating plate 17a may have first holes 30 and a second hole 32, as shown in FIG. 2. The first hole 30 and second hole 32 are a hole through the first insulating plate 17a. The first hole 30 functions to release gas, generated by reaction between the electrode and the non-aqueous electrolyte, upwardly from the secondary battery 10. The shape of the first hole 30 is not limited, and may be circular, for example. The number of first holes 30 is one or more, without limitation. The second hole 32 serves to pass the positive electrode lead 19 therethrough. The second hole 32 is larger than the first hole 30 and substantially semicircular, for example.

The first insulating plate 17a is more heat resistant than the second insulating plate 17b. With this, the first insulating plate 17a can maintain its shape even in case of abnormal heat generation or fire from the secondary battery 10, keeping a passage for exhausting gas generated inside the battery, thereby the secondary battery 10 can be prevented from exploding or releasing gas through other than the opening hole of the cap 27.

Examples of the material for the first insulating plate 17a include thermosetting resins such as phenolic resins, epoxy resins, and unsaturated polyester resins containing insulating fibers such as glass fibers impregnated therewith. The material for the first insulating plate 17a is preferably a glass fiber-containing phenolic resin (GP).

Examples of the material for the second insulating plate 17b include polypropylene (PP) and polyethylene (PE). The material for the second insulating plate 17b is preferably PP. PP is easily processable, and thus the second insulating plate 17b made of PP is produced easily. In addition, PP is easily deformable. Thus, even when the secondary battery 10 is subjected to external impact and deforms, the second insulating plate 17b is not broken and therefore, the exterior can 15 can be prevented from coming into contact with the upper portion of the electrode assembly 14.

The first insulating plate 17a is preferably thicker than the second insulating plate 17b. With this configuration, the secondary battery 10 can exhibit improved heat resistance. With the second insulating plate 17b thinner than the first insulating plate 17a, the secondary battery 10 can exhibit improved capacity. With the second insulating plate 17b of a thin ring shape, the second insulating plate 17b does not break even when the secondary battery 10 is externally impacted and deformed, which prevents the exterior can 15 from coming into contact with the upper portion of the electrode assembly 14. The thickness of the first insulating plate 17a is 0.2 mm to 0.5 mm, for example. The thickness of the second insulating plate 17b is 0.1 mm to 0.2 mm, for example.

### EXAMPLES

Although the present disclosure will be further described below by way of Examples, the present disclosure is not limited thereto.

### <Example 1>

### [Production of Positive Electrode]

A lithium-transition metal complex oxide represented by LiNi_{0.8}Co_{0.15}Al_{0.05}O₂ was used as a positive electrode active material. 100 pts.mass of the positive electrode active material, 2.0 pts.mass of acetylene black (AB) as a conductive agent, and 2.0 pts.mass of polyvinylidene fluoride (PVdF) as a binding agent were mixed, and an appropriate amount of N-methyl-2-pyrrolidone (NMP) was added thereto, thereby preparing positive electrode mixture slurry. Next, the positive electrode mixture slurry was applied on both sides of a positive electrode current collector made of aluminum foil and dried, following which the resulting material was cut into a predetermined size of electrode, and rolled with a roller, thereby obtaining a strip-shaped positive electrode. A substantially central portion of the positive electrode in the longitudinal direction was provided with no compound layer to serve as a positive electrode-exposed portion where the surface of the current collector was exposed, and a positive electrode lead made of aluminum was welded to the positive electrode-exposed portion.

### [Production of Negative Electrode]

Graphite was used as a negative electrode active material. 100 pts.mass of the negative electrode active material, 1.0 pt.mass of styrene-butadiene rubber (SBR) as a binding agent, and 1.0 pt.mass of carboxy methyl cellulose (CMC) as a thickening agent were mixed, and an appropriate amount of water was added thereto, thereby preparing negative electrode mixture slurry. Next, the negative electrode mixture slurry was applied on both sides of a negative electrode current collector made of copper foil and dried, following which the resulting material was cut into a predetermined size of electrode, and rolled with a roller, thereby obtaining a strip-shaped negative electrode. The outer end of the negative electrode was provided with no compound layer to serve as a negative electrode-exposed portion where the surface of the current collector was exposed, and a negative electrode lead made of nickel-copper was welded to the negative electrode-exposed portion.

### [Production of Electrode Assembly]

The produced positive electrode and negative electrode were spirally wound with a separator interposed, which is a microporous membrane made of an olefin resin, thereby preparing a wound electrode assembly. In this process, one end of the positive electrode connected with the positive electrode lead was placed at the inner end, whereas one end of the negative electrode connected with the negative electrode lead was placed at the outer end.

### [Preparation of Non-aqueous Electrolyte]

To a mixed solvent containing ethylene carbonate (EC) and diethyl carbonate (DEC) at a volume ratio of EC:DMC=40:60 was added 1 mol/L of LiPF₆, thereby preparing a non-aqueous electrolyte.

### [Production of Upper Insulating Plate]

A glass fiber-containing phenolic resin (GP) was selected as a material for a first insulating plate. Polypropylene (PP) was selected as a material for a second insulating plate. As shown in FIG. 2, the first insulating plate was formed in a disk shape having first holes and a second hole, and the second insulating plate was formed in a ring shape. The outer diameter of the first insulating plate was of such a size to be substantially in contact with the inner diameter of a grooved portion of an exterior can. The thickness of the first insulating plate was 0.3 mm. The outer diameter of the second insulating plate was of such a size to be substantially in contact with the inner side of the exterior can. The ring width of the second insulating plate was of such a size to sufficiently cover the inwardly-protruding length of the grooved portion in order to sufficiently insulate the exterior can and the electrode assembly from each other. The thickness of the second insulating plate was 0.1 mm. This thickness is smaller than those of conventionally used insulating plates.

### [Production of Secondary Battery]

A metal can of a bottomed cylindrical shape having a diameter of ϕ18 mm and a height of 65 mm was used as the exterior can. The electrode assembly was housed in the exterior can in the state where the lower insulating plate was placed below the electrode assembly and the upper insulating plate, which had the first insulating plate and the second insulating plate in order from the top, was placed above the electrode assembly. Next, the negative electrode lead was welded to the bottom of the exterior can, and the sealing assembly was welded to the positive electrode lead. A grooved portion was formed by pressing at the opening of the exterior can, and the non-aqueous electrolyte was poured into the exterior can. After that, the opening of the exterior can was sealed by crimping the sealing assembly with the gasket 28 interposed, thereby producing a cylindrical non-aqueous electrolyte secondary battery. The secondary battery produced had a rated capacity of 5 Ah.

### <Comparative Example 1>

A battery was produced in a manner similar to that of Example 1, except that PP was selected as a material for the first insulating plate in the process of producing an upper insulating plate.

### <Comparative Example 2>

A battery was produced in a manner similar to that of Example 1, except that GP was selected as a material for the second insulating plate in the process of producing an upper insulating plate.

### <Comparative Example 3>

A battery was produced in a manner similar to that of Example 1, except that PP was selected as a material for the first insulating plate and GP was selected as a material for the second insulating plate in the process of producing an upper insulating plate.

### <Comparative Example 4>

A battery was produced in a manner similar to that of Example 1, except that a third insulating plate was produced in the process of producing an upper insulating plate. GP was selected as a material for the third insulating plate, and the third insulating plate had a shape similar to that of the first insulating plate in plan view and had the same outer diameter as that of the second insulating plate. The third insulating plate was employed as an upper insulating plate. The thickness of the third insulating plate was the same as that of the first insulating plate.

### <Comparative Example 5>

A battery was produced in a manner similar to that of Example 1, except that a fourth insulating plate was produced in the process of producing an upper insulating plate. PP was selected as a material for the fourth insulating plate, and the fourth insulating plate had a shape similar to that of the first insulating plate in plan view and had the same outer diameter as that of the second insulating plate. The fourth insulating plate was employed as an upper insulating plate. The thickness of the fourth insulating plate was the same as that of the first insulating plate.

### [Evaluation by Means of Flat Plate Crush Test]

Ten secondary batteries of each of Example and Comparative Examples were subjected to a flat plate crush test. First, the secondary battery was charged at a constant current of 0.3 It to reach a voltage of 4.2 V under an environment of 25°C, and then charged at a constant voltage of 4.2 V to reach a current value of 1/50 It. After that, the secondary battery was discharged at a constant current of 0.2 It to reach a voltage of 2.5 V. Next, the secondary battery after the discharge was laterally pressed with a 20 cm x 20 cm square stainless-steel plate with a load of 20 kN at a speed of 15 mm/sec. under an environment of 25°C. There were produced 5 batteries which were crushed until the batteries deformed 10% of the diameter of the exterior can, and 5 batteries which were crushed until the batteries deformed 25% of the diameter of the exterior can. The batteries after the test were disassembled to check for a short circuit at the upper portion of the electrode assembly due to breaking of the upper insulating plate.

### [Evaluation by Means of Burning Test]

Five secondary batteries of each of Example and Comparative Examples were subjected to a burning test. First, the secondary battery was charged at a constant current of 0.3 It to reach a voltage of 4.2 V under an environment of 25°C, and then charged at a constant voltage of 4.2 V to reach a current value of 1/50 It. The battery after the charge was laid on a metal net, and the metal net was covered with an aluminum net basket placed thereon. Then, the side wall of the secondary battery was heated with a flame of a burner placed right below and 38 mm away from the net. The batteries having undergone the test were checked whether the batteries exploded and whether any pinhole was generated.

Evaluation results regarding Example and Comparative Examples are shown in Table 1. Table 1 shows the number of batteries confirmed to have a short-circuit mark in the flat plate crush test, and the number of batteries confirmed to have exploded or have a pinhole in the burning test. In the case where any of the 5 batteries is confirmed to have been damaged in the burning test, the 5 batteries were not checked for pinholes. Table 1 also shows the materials and shapes of the first insulating plate and second insulating plate.

**[Table 1]**

| | First insulating plate | Second insulating plate | Flat plate crush test | | Burning test | |
|---|---|---|---|---|---|---|
| | | | Short-circuit mark at 10 % crush | Short-circuit mark at 25 % crush | Explosion | Pinhole |
| Example | GP disk | PP ring | 0/5 | 0/5 | 0/5 | 0/5 |
| Comparative example 1 | PP disk | PP ring | 0/5 | 0/5 | 3/5 | - |
| Comparative example 2 | GP disk | GP ring | 2/5 | 5/5 | 0/5 | 2/5 |
| Comparative example 3 | PP disk | GP ring | 2/5 | 5/5 | 2/5 | - |
| Comparative example 4 | GP disk | | 2/5 | 5/5 | 0/5 | 0/5 |
| Comparative example 5 | PP disk | | 0/5 | 0/5 | 2/5 | - |

Within the scope of the claims, short-circuits due to cracking of the insulating plate were prevented in the flat plate crush test. In addition, combustion gas was prevented from being released through other than the gas exhausting valve in the burning test, reducing the risk in terms of safety.

### REFERENCE SIGNS LIST

10 secondary battery, 11 positive electrode, 12 negative electrode, 13 separator, 14 electrode assembly, 15 exterior can, 16 sealing assembly, 17 upper insulating plate, 17a first insulating plate, 17b second insulating plate, 18 lower insulating plate, 19 positive electrode lead, 20 negative electrode lead, 21 grooved portion, 22 filter, 23 lower vent member, 24 insulating member, 25 upper vent member, 26 PTC thermistor plate, 27 cap, 28 gasket, 30 first hole, 32 second hole

## Claims

1. A cylindrical non-aqueous electrolyte secondary battery, comprising:
a bottomed cylindrical exterior can having an opening that is provided with a grooved portion;
an electrode assembly and a non-aqueous electrolyte that are housed in the exterior can;
a sealing assembly fixed by crimping between the grooved portion and an open edge at the opening; and
an upper insulating plate inserted between the electrode assembly and the sealing assembly, wherein
the upper insulating plate has a first insulating plate of a disk shape smaller than an inner diameter of the grooved portion and has a second insulating plate of a ring shape placed under the first insulating plate, and
the first insulating plate is more heat resistant than the second insulating plate.

2. The cylindrical non-aqueous electrolyte secondary battery according to claim 1, wherein a ring width of the second insulating plate is greater than a protruding length of the grooved portion in an inward direction of the exterior can.
